# EUROPEAN PATENT APPLICATION

(11) **EP 1 246 322 A2**
(43) Date of publication of application: **02.10.2002**
(21) Application number: 02251194.3
(22) Date of filing: 21.02.2002
(51) Int. Cl.: H01S 3/067

(54) **Method and apparatus for minimising gain deviation in optical fibre amplifier**

(30) Priority: 29.03.2001 US 821580
(71) Applicant: Nortel Networks Limited, St. Laurent, Quebec H4S 2A9 (CA)
(72) Inventor: Flintham, Barrie, Totnes, Devon TQ9 7LH (GB); Flannery, Damian, Torquay, Devon TQ2 TTF (GB); Gill, Jonathan W., Lvybridge, Devon PL21 0PW (GB); Stephens, Marc, Solihull, West Midlands B95 6AX (GB); McClean, Ian P., Brixham, Devon TQ5 8DH (GB)
(74) Representative: Bewley, Ewan Stuart

(57) **Abstract**

Commercially available optical fiber amplifiers have gain over a large optical bandwidth, and for many applications, especially long distance fiber communications, developing techniques to flatten the gain of EDFA's is important. High gain amplifiers give rise to gain ripple and are thus more difficult to flatten effectively and efficiently. The invention provides a method of amplifying a signal in an optical fiber in an optical fiber amplifier having a pre-determined operating temperature range, whereby the temperature of the fiber in the pre-determined operating temperature range is maintained, and the fiber has an optimal length so as to minimize gain ripple in the amplifier over the operating temperature range. The invention also provides an optical fiber amplifier having an optimal length of fiber, a heater (2) and a temperature monitor (3) both coupled thermally to the fiber. The temperature monitor is responsive to the temperature falling below the pre-determined operating temperature range of the amplifier to energize the heater, and is responsive to the temperature rising higher than the pre-determined operating temperature range of the amplifier to de-energize the heater.

## Description

The present invention relates to improvements in optical fiber amplifiers, and more particularly to an apparatus and method for minimizing gain deviation for erbium optical amplifiers.

Most modern optical transmission systems are so called wavelength division multiplexing systems (WDM). Such systems are capable of simultaneously transmitting several streams of information through the system, each on a different wavelength channel. This information is typically transmitted along an optical fiber. In systems in which only short lengths of optical fiber are used the number of channels (and hence the transmission capacity) is limited by the width of the transmission window of the fiber.

All fiber optic cables absorb a small fraction of the light passing along their length. If optical information is to be transmitted over long distances then optical amplifiers must be included along the length of the fiber optic cable. These amplifiers boost the signal strength in order to overcome this absorption. However, if an optical amplifier is included in an optical transmission system then the number of channels is limited by the amplifier gain bandwidth. Amplifiers having a broad gain bandwidth are therefore preferred.

Commercially available erbium doped fiber amplifiers (EDFA's) have gain over a large optical bandwidth. Over this bandwidth the gain may depend strongly on the wavelength of the input signal. For many applications, especially long distance fiber communications, however, it is highly desirable to operate with wavelength independent gain. To take advantage of the enormous fiber bandwidth, signals with different wavelengths falling within the gain bandwidth of the EDFA are carried simultaneously on the same optical fibers. If these signals experience different gains, they will have different powers at the output of the fibers. This imbalance becomes more acute as the signals pass through each successive EDFA, and can be significant for very long distances.

Flattening the gain of the EDFA's will minimize this problem and produce amplifiers that can support a considerable optical bandwidth and thus a higher data rate. Therefore developing methods to flatten the gain of amplifiers is important. However, high gain amplifiers tend to be more peaky giving rise to gain ripple, and are thus more difficult to flatten effectively.

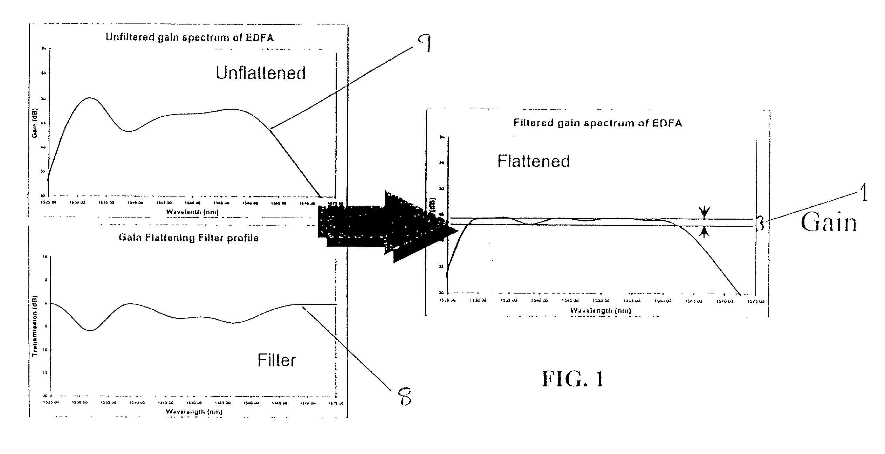

Gain ripple is a measure of the maximum to minimum deviation in gain against a defined wave gain. The best achievable gain ripple, i.e. the minimum, in EDFA's, for a specific operating gain is determined by the accuracy of the optical filter shape match to the EDFA gain shape and by the operating temperature of the device. Filter shapes are in general targeted to provide minimum gain ripple at the nominal operating temperature but cannot be matched due to manufacturing limitations. Figure 1 illustrates the phenomenon of gain ripple 1 and shows the gain ripple 1 in a full band (e.g. 1528-1563nm) EDFA achieved by matching the gain flattening filter profile 8 to the unflattened gain spectrum 9 of the EDFA.

Also, it is known that the gain spectrum of erbium fibers varies with temperature, and several systems have been developed to achieve gain flattening. Dynamic gain flattening devices have been realized and are used to provide gain equalization with temperature, however the devices are costly and tend to be bulky.

The combination of variable optical attenuation (VOA) and pump power adjustment can also be used to equalize gain for temperature effects. Whilst this does not address the fundamental shape changes it will remove any gain tilt versus temperature effects. In this case, however, the combination is again costly in terms of pump power provision and VOA cost.

Controlling the erbium fiber temperature by holding its temperature at the fixed operating condition has been attempted by using a peltier cooler for the erbium fiber, or a heater to take the erbium fiber temperature to the maximum operating temperature. However, both methods are very inefficient options in terms of power consumption, are unreliable, and provide limited actual performance benefit.

Power consumption in optical communications equipment is rapidly becoming a serious limiting factor in equipment design, and so minimizing ripple dependencies as efficiently as possible has become important.

It is a general objective of the present invention to overcome or significantly mitigate one or more of the disadvantages of the prior art.

The above objective is met by the combinations of features of the main claims, the sub-claims disclose further advantageous embodiments of the invention.

Fundamentally the spectral gain deviation in erbium fiber increases with decreasing temperature, but the magnitude of the change is influenced by the initial gain shape as determined by the degree of filter match and induced gain ripple. Limiting the temperature excursion of the fiber has been demonstrated to reduce the over-temperature induced gain ripple, but importantly, the choice of fiber length can be used to offset temperature effects based on the nature of the filter error. Thus selecting the correct fiber length and limiting the temperature excursion of the optical amplifier, as opposed to providing complete temperature control, is viewed as an efficient way of minimizing gain deviation over temperature for EDFA's.

According to a first aspect the invention provides a method of amplifying a signal in a fiber using an optical amplifier having a predetermined operating temperature range, said method comprising maintaining the temperature of said optical fibre in the predetermined operating temperature range of the optical amplifier; said optical fibre having an optimal length such as to minimize gain ripple in the optical fibre amplifier over the operating temperature range.

Preferably, the optical amplifier includes at least one mandrel onto which the optical fiber is spooled, a temperature monitor and a heater both coupled thermally to the or each said mandrel, and a temperature control circuit responsive to the temperature monitor; the mandrel or mandrels together having a capacity for spooling an optimal length of said optical fiber, said optimal length being such as to minimize gain ripple in said amplifier over an operating temperature range bounded by said first and second threshold temperatures; said method comprising: maintaining the temperature of said optical fiber in the operating range of said optical amplifier bounded by said first and second threshold temperatures.

Preferably, the optical amplifier includes a gain flattening filter and said method further comprises determining the filter error function for the amplifier; and calculating the optimal length of said optical fiber for minimum gain ripple over the operating temperature of said amplifier from the filter error function.

According to a second aspect the invention provides a method of manufacture of an optical fiber amplifierwhich includes a gain flattening filter, a length of optical fiber and a predetermined operating temperature range, said method comprising:
calculating an optimal length of said optical fiber for minimum gain ripple over said operating temperature range of said optical fiber amplifier; and
making said optical fiber amplifier from said optical fiber of said optimal length.

A technique for calculating the optimal length of optical fibre is by determining a filter error function for said optical fibre amplifier and calculating from said filter error function the optimal length of optical fibre.

Another technique for calculating the optimal length of optical fibre is:
measuring the total passive loss of the optical fiber amplifier including said gain flattening filter, without the presence of optical fiber, at substantially nominal operating temperature;
deriving an amplifier gain spectrum from a reference gain spectrum for said optical fiber and from said measurement of the total passive loss; and
calculating gain ripple against optical fiber length over temperature from said amplifier gain spectrum.

Preferably, the reference gain spectrum for the optical fibre can be measured.

The optimal length of optical fibre may comprise one or more spools of optical fibre, the combined length of optical fibre in said spools being substantially equal to the optimal length.

The optical fibre may be spooled on to one or more mandrels.

According to a third aspect the invention provides an optical fiber amplifier comprising an optimal length of fiber, said optimal length being such as to minimize gain ripple in said amplifier over a predetermined operating temperature range of said amplifier and a means for controlling the temperature of said optimal length of optical fiber.

Preferably, the means for controlling the temperature of the length of optical fibre includes a heater and a temperature monitor, both coupled thermally to the optimal length of fibre.

Preferably, the means for controlling the temperature of the length of optical fibre further includes a temperature control circuit responsive to said temperature monitor signaling a temperature below a first predetermined threshold temperature to energize said heater, and responsive to said temperature monitor signaling a temperature above a second predetermined threshold temperature, higher than said first threshold temperature, to de-energize the heater. Where the operating temperature range of the optical fibre amplifier is bounded by said first and second threshold temperatures.

Preferably, the amplifier further comprises a gain flattening filter; wherein a filter error function is calculable for the filter, the optimal length of said optical fiber for minimum gain ripple over the operating temperature of the amplifier being determinable from the filter error function.

The optimal length of optical fibre may comprise one or more spools of optical fibre, the combined length of optical fibre in said spool or spools being substantially equal to said optimal length.

The optical fibre amplifier may also comprise at least one mandrel onto which optical fiber is spoolable in use, the mandrel or mandrels together having a capacity for spooling a total length of fiber substantially equal to an optimal length of said optical fiber, said optimal length being such as to minimize gain deviation in said amplifier over a predetermined operating temperature range of said amplifier.

According to a fourth aspect the invention provides an optical system comprising:
a transmitter for transmitting optical signals;
a receiver for receiving said optical signals from said transmitter;
a transmission channel connecting said transmitter to said receiver
and along which said optical signals travel from said transmitter to said receiver; and
an optical fiber amplifier for amplifying said optical signals as they travel along said transmission channel, said optical fiber amplifier comprising one or more spools of optical fiber; the combined length of optical fiber in said spool or spools being substantially equal to an optimal length of said optical fiber, said optimal length being such as to minimize gain deviation in said amplifier over a predetermined operating temperature range of said amplifier;
a heater means for heating said optical fiber; and a monitor means for monitoring the temperature of said optical fiber, and responsive to the temperature falling below the predetermined operating temperature range of said amplifier to energize heater means, and responsive to the temperature rising higher than said predetermined operating range of said amplifier to de-energize the heater means.

Other aspects and features of the present invention will become apparent to those ordinarily skilled in the art upon review of the following description of specific embodiments of the invention in conjunction with the accompanying figures.

The summary of the invention does not necessarily disclose all the features essential for defining the invention; the invention may reside in a subcombination of the disclosed features.

Embodiments of the invention will now be described by way of example only, with reference to the drawings in which:-
Figure 1 is a plot showing the measurement of gain ripple obtained by applying a gain flattening filter to the unflattened gain spectrum of an EDFA;
Figure 2 is an exploded perspective view of the apparatus of an embodiment of the present invention;
Figure 3 is a schematic circuit diagram of the feedback circuit of the embodiment illustrated in figure 2;
Figure 4a is a plot showing the predicted behavior of gain ripple against fiber length over temperature;
Figure 4b is a plot showing the gain flattening filter profile used to obtain the plot of figure 4a;
Figure 5a is a plot showing the behaviour of gain ripple against fiber length over temperature for a low loss red end filter error;
Figure 5b is a plot showing the gain flattening filter profile used to obtain the plot of figure 5a;
Figure 5c is a plot showing the behaviour of gain ripple against fiber length over temperature for a high loss red end filter error;
Figure 5d is a plot showing the gain flattening filter profile used to obtain the plot of figure 5c;
Figure 5e is a plot showing the behaviour of gain ripple against fiber length over temperature for a low loss blue end filter error;
Figure 5f if a plot showing the gain flattening filter profile used to obtain the plot of figure 5e;
Figure 5g is a plot showing the behaviour of gain ripple against fiber length over temperature for a high loss blue end filter error;
Figure 5h is a plot showing the gain flattening filter profile used to obtain the plot of figure 5g;
Figure 6 is a plot showing a typical unfiltered gain profile for EDF over different temperatures; and
Figure 7 is a plot showing the dynamic gain variation for the gain profile of figure 6.

### Detailed Description

The following description is of preferred embodiments by way of example only and without limitation to the combination of features necessary for carrying the invention into effect.

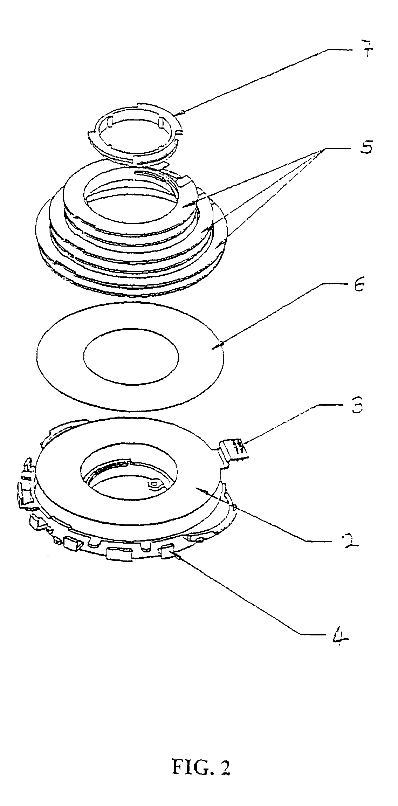

A preferred embodiment will now be described which is shown in figure 2.

A concentric foil heater 2 and a temperature monitoring device 3 are co-mounted within a housing 4 which is disposed around erbium spools 5 of an optical amplifier. A thermal interface 6 lies between the heater 2 and the erbium spools 5, allowing thermal communication between the heater 2 and the erbium spools 5. The heater, the thermal interface and erbium spools are held in position by a locking ring 7 which at one end engages within the erbium spools 5, and at the other end engages within the housing 4. Both the heater 2 and temperature monitoring device 3 are connected to a feedback circuit 11 which dynamically produces a control signal in response to the measured temperature of the erbium fiber dropping below a pre-determined threshold temperature, normally the nominal operating temperature. When the spool temperature falls below the pre-determined threshold, a signal is received by the heater to which activates it to heat the erbium fiber to a pre-determined maximum temperature. The actual pre-determined values are chosen based on the amplifier design and recognized nominal operating temperature of the amplifier.

The temperature monitoring device 3 is integrated into the heater 2 in the form of an etched nickel wire, whereby the wire's resistance changes linearly with temperature. The wire forms part of the feedback circuit 11 as the wire's temperature dependence on resistivity is used in a 5V biased potential divider circuit for monitoring the temperature of the EDF. The temperature of the EDF in the spools 5 relative to the response of the wire 3 is determined by calibration.

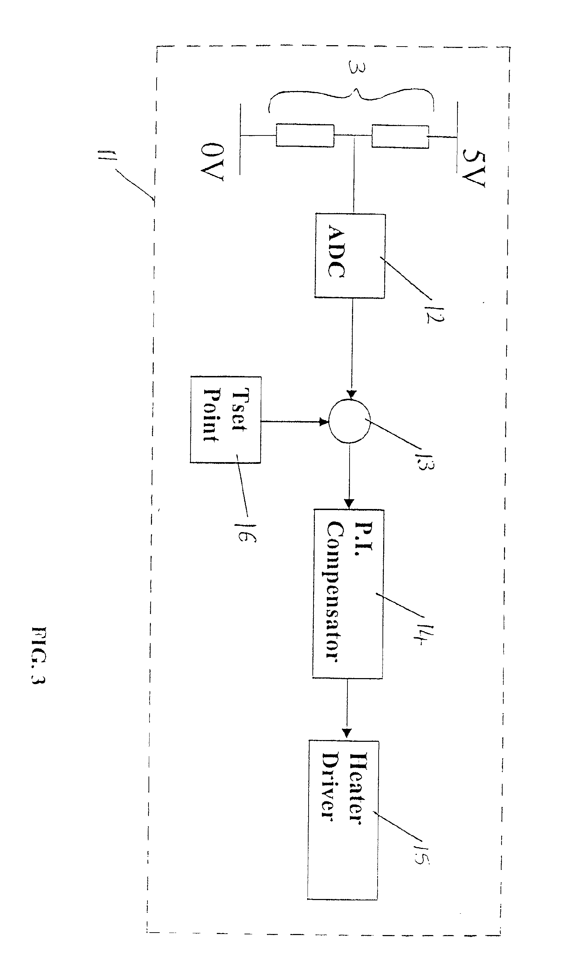

Figure 3 shows a schematic diagram of the feedback circuit 11 where the signal from the potential divider is fed to an Analog to Digital converter (ADC) 12. The resulting digital signal (temperature signal) is input to a comparator 13 that compares the temperature signal against a preset value, Tset point (16), indicative of the threshold temperature. If the temperature signal is found to be less than the threshold temperature, the comparator sends a signal to a Proportional Integral compensator (PI compensator) 14 that applies error compensation, in respect of the heater driver circuit, to the signal. The compensated signal is then input into a heater driver circuit for energizing the heater 2.

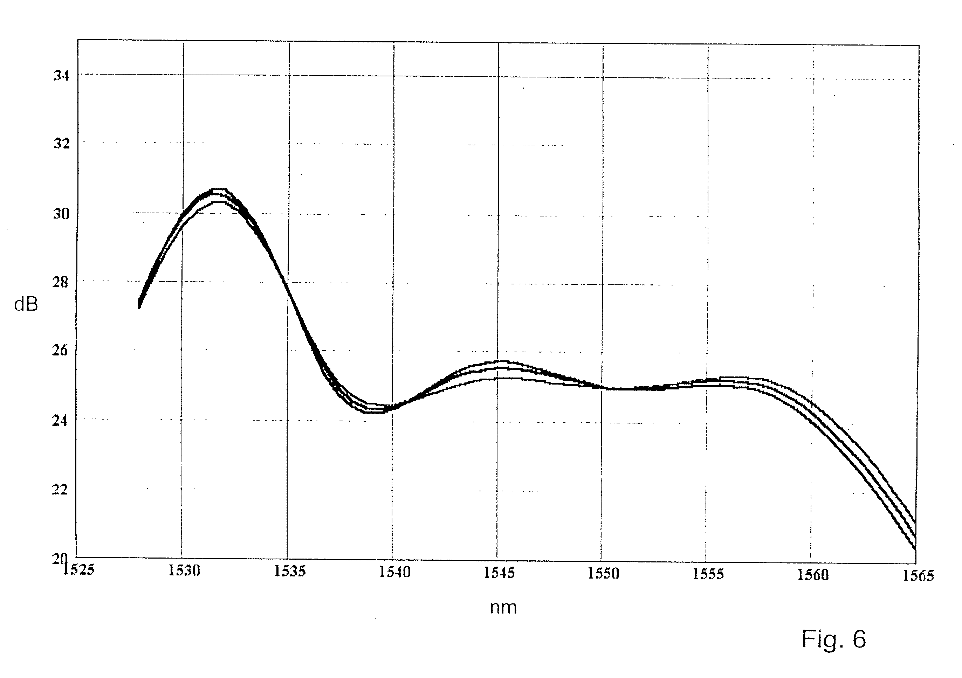

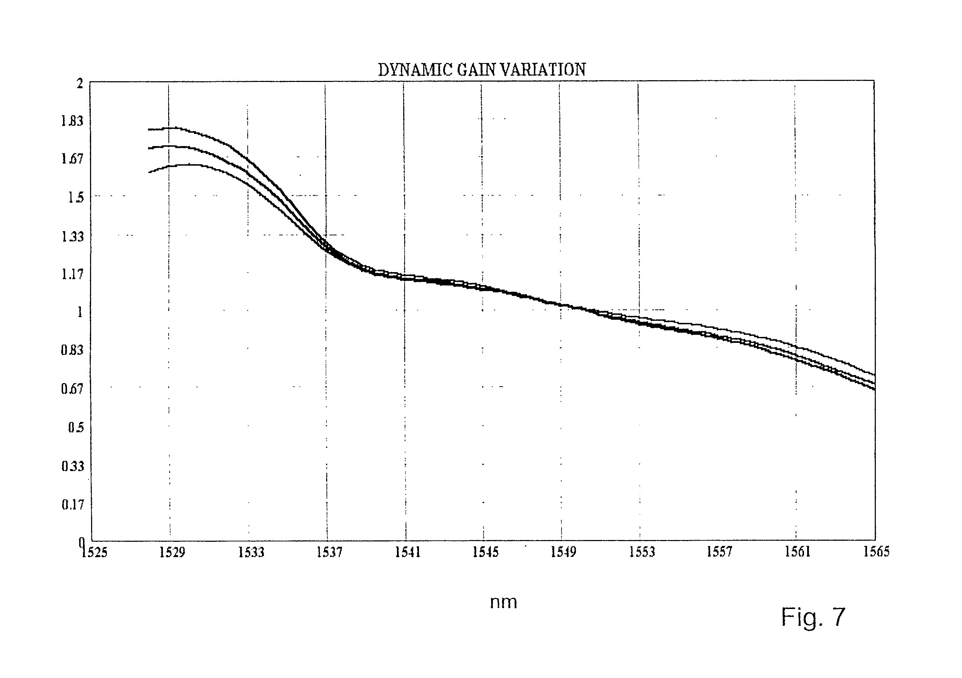

Erbium fiber is inherently temperature dependent with respect to its gain spectrum. This property is illustrated in figure 6 which shows a part of a typical unfiltered game profile for EDF against wavelength for different temperatures. It can be seen that the gain spectrum varies over temperature, and that the gain spectrum is dominated by tilt effects especially at longer wavelengths. The rate of change of gain (dynamic gain variation) for the spectrum of figure 6 for different temperatures is shown in figure 7, and again this illustrates the inherent temperature dependence of erbium fiber.

As illustrated in figure 1 and as previously discussed, the characteristic shape of the gain deviation profile and hence gain ripple 1 for an EDF depends on the matching of the gain flattening filter profile 8 to the unfiltered gain spectrum 9. More particularly, it depends on the mismatch in shape of the two.

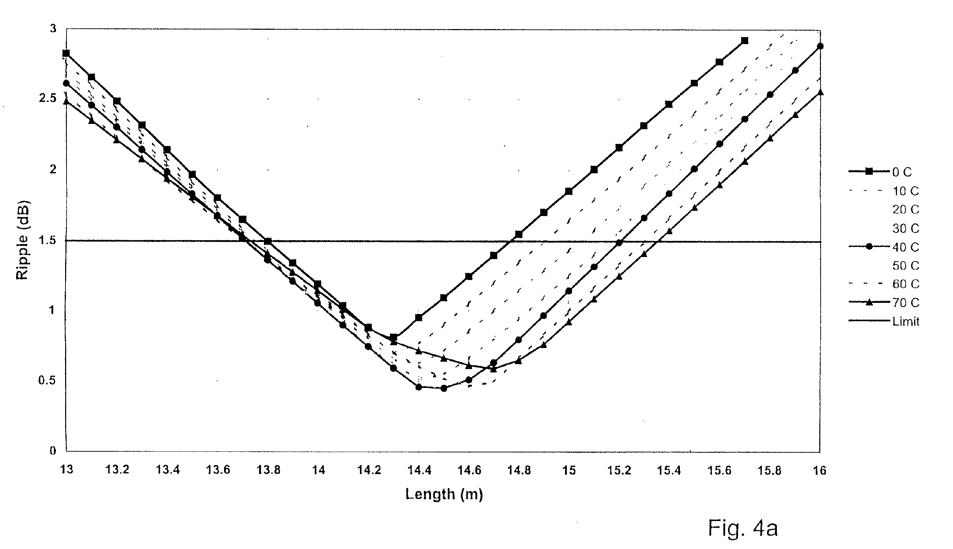

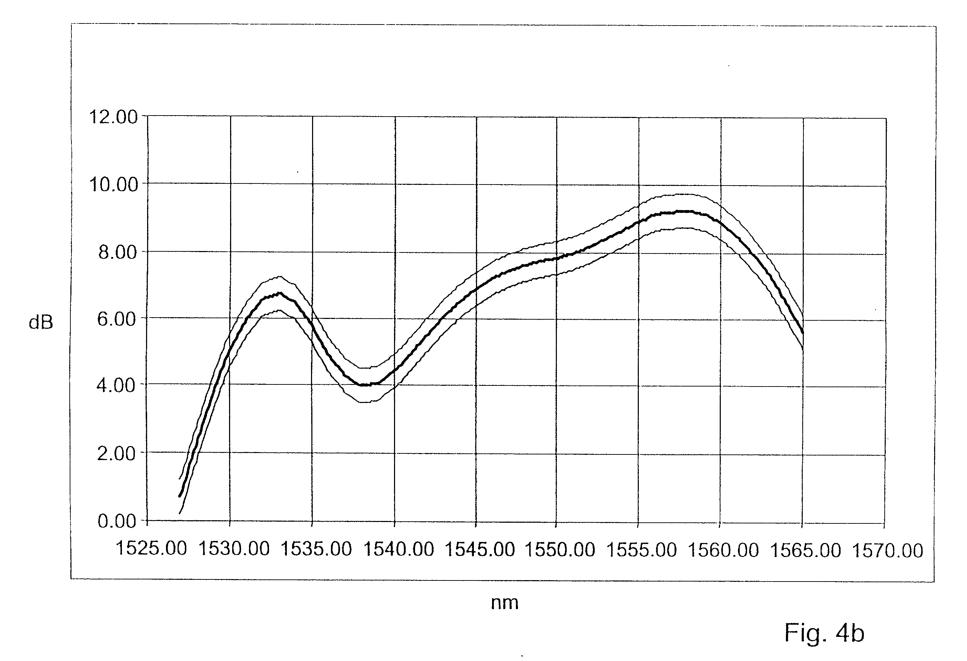

Knowing the filter error function for the amplifier allows the optimum fiber length for minimum gain ripple for a particular temperature range to be targeted. Using this method an EDF reference gain spectrum is measured, and a measurement is also made of the total passive loss of the optical amplifier including the gain flattening filter, without the EDF present, at nominal operating temperature. From these measurements a gain spectrum for the optical amplifier is derived and the standard dynamic gain tilt (DGT) and temperature dynamic gain tilt (TDGT) equations are applied to calculate a predicted gain ripple against fiber length and temperature plot for the optical amplifier. Figure 4a shows such a plot, using a gain flattening filter profile as shown in figure 4b.

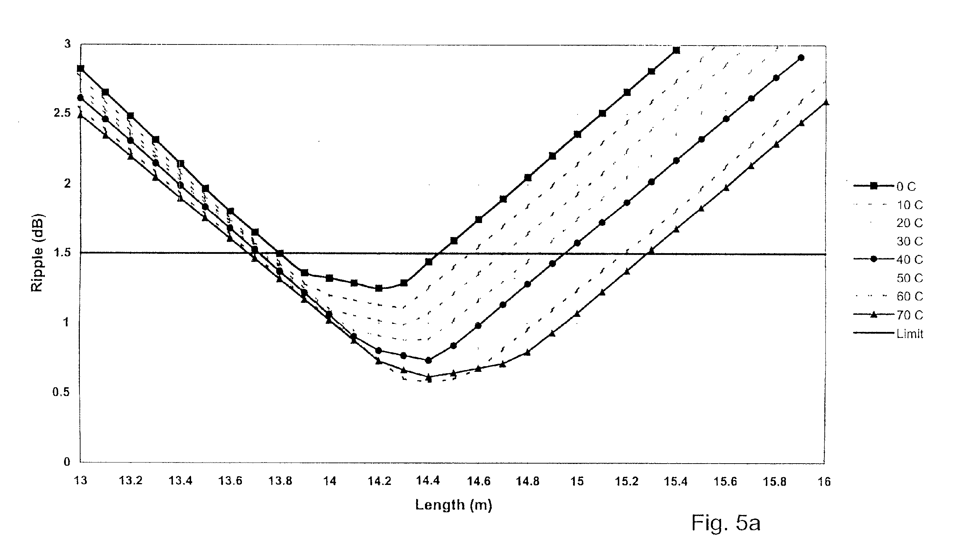

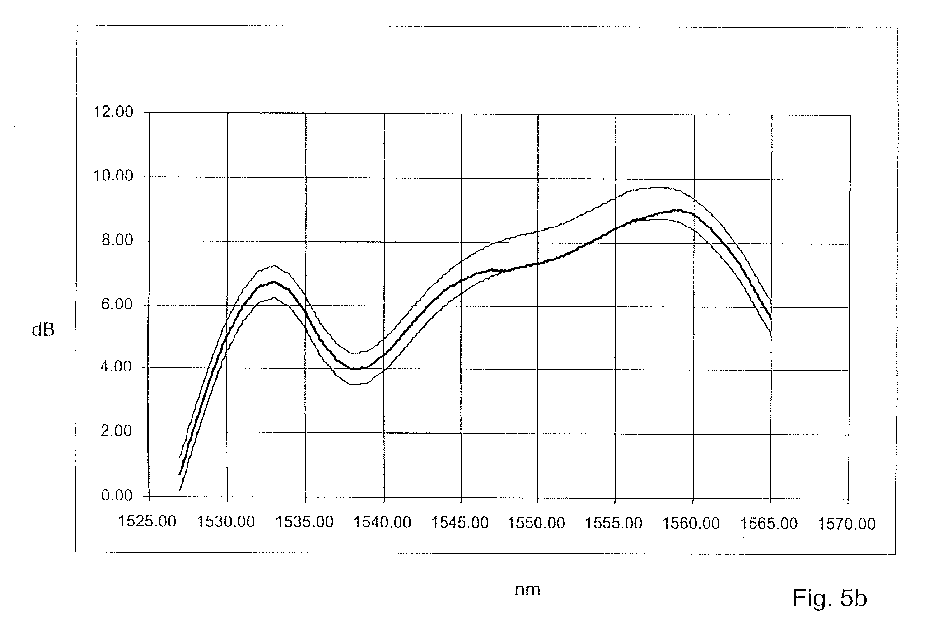

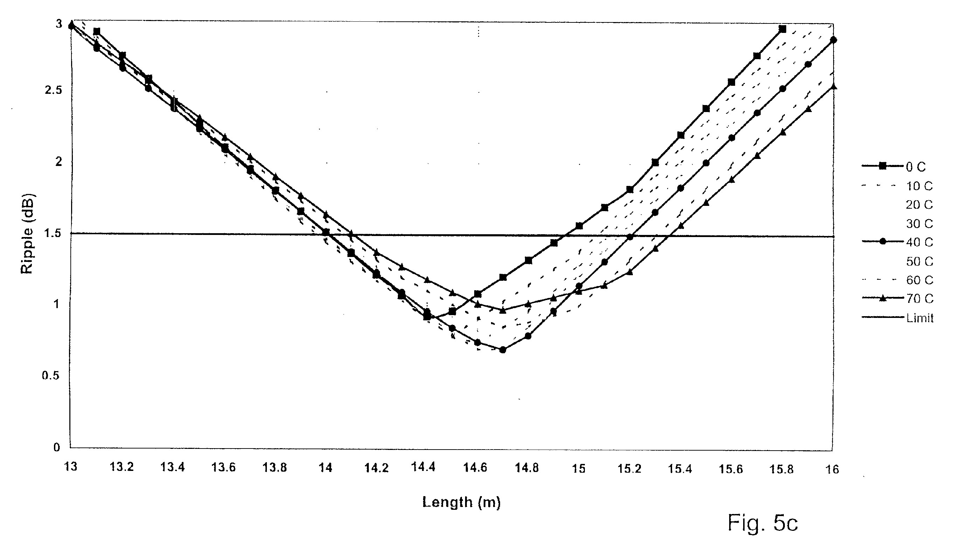

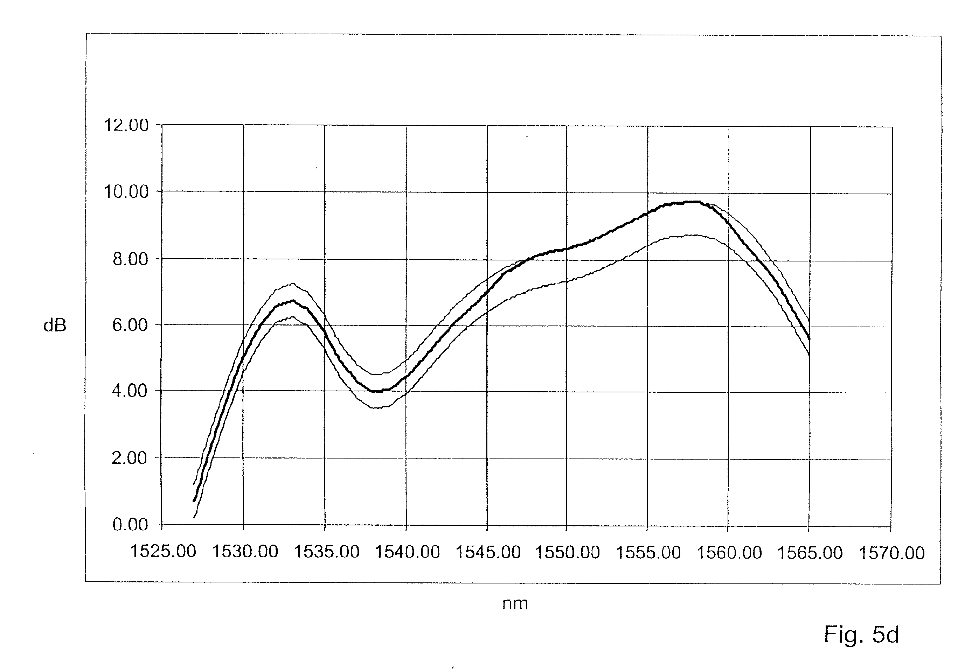

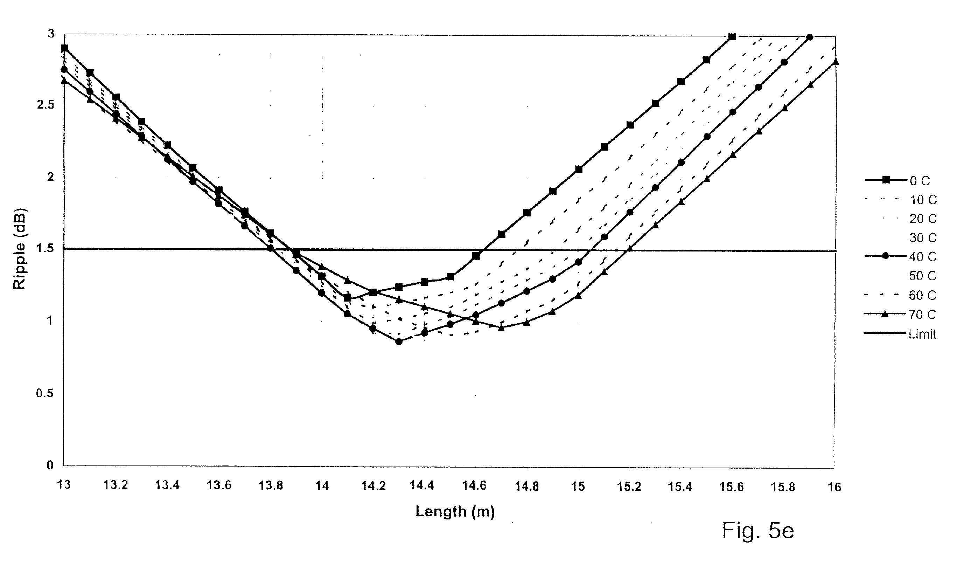

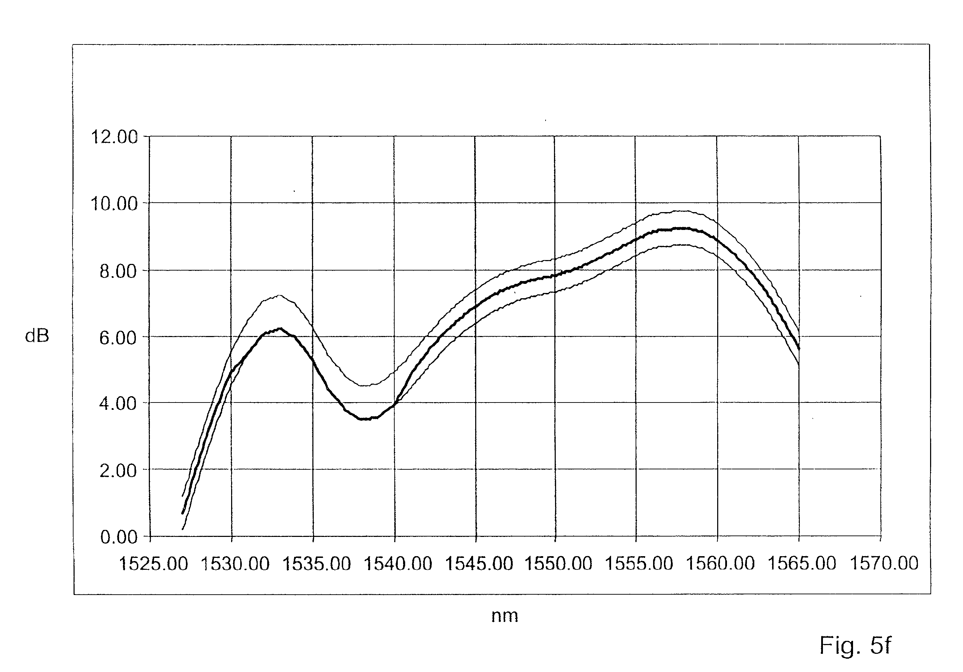

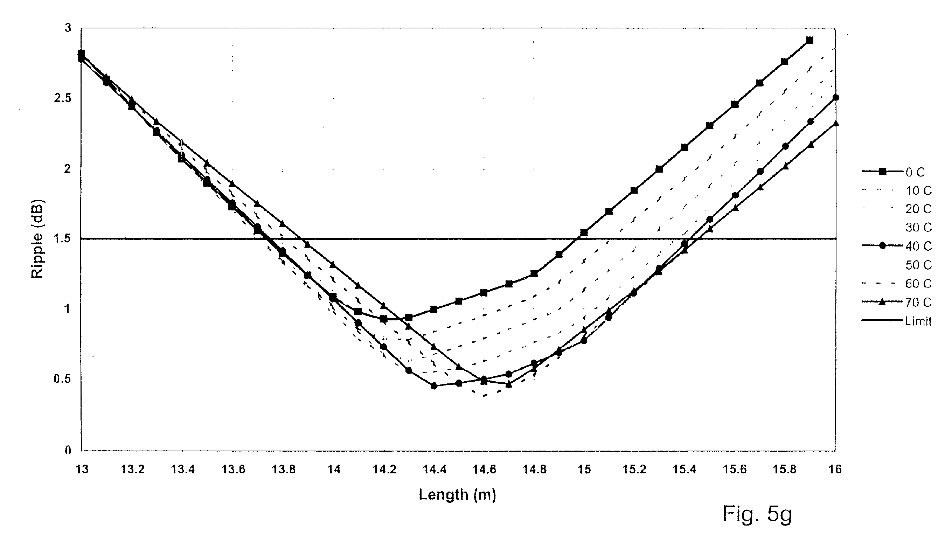

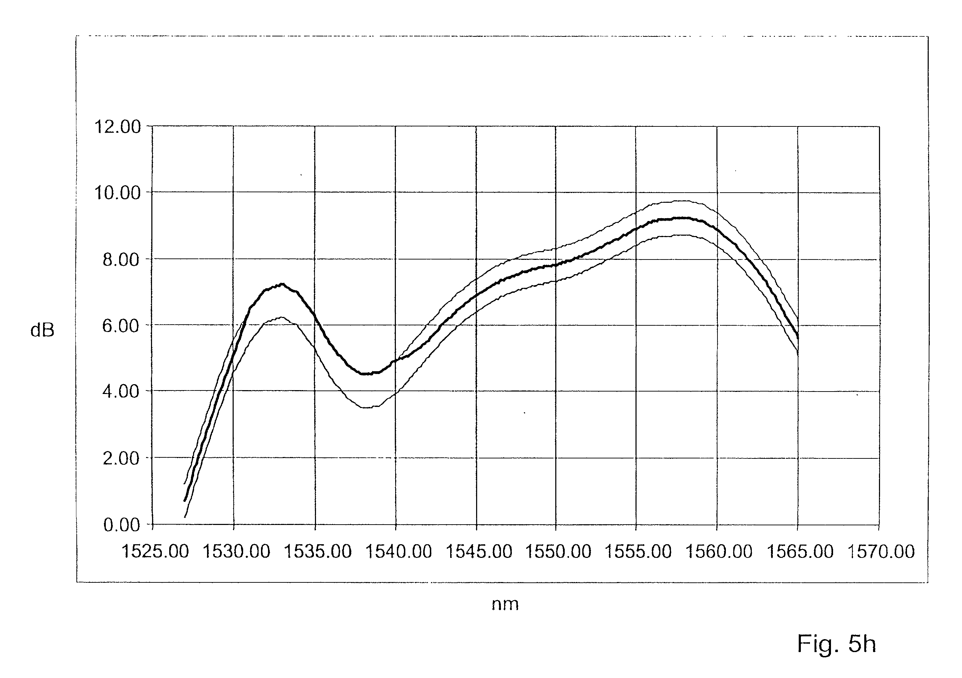

Figures 5a, 5c, 5e and 5g illustrate the behaviour of gain ripple for different temperatures against the fiber length for different filter errors. Figures 5b, 5d, 5f and 5h respectively show the gain flattening filter profiles used to obtain the plots of figures 5a, 5c, 5e and 5g respectively. On a comparison of the plots for gain ripple against length for different temperatures it is seen that the plot characteristics vary according to the type of filter error. For example, the plot of figure 5a exhibits a very large temperature dependence for a low loss red end filter error.

From the plot, the optimum EDF length is chosen for achieving minimum gain ripple over the operating temperature range imposed by the EDF spools 5. Before the optimum fiber length can be selected, it is necessary to know the operating temperature range in which the EDFA will be used, i.e. the operating conditions. With this knowledge, the optimum fiber length can be picked for maintaining minimal gain ripple over the temperature range the heater will be maintaining. For example, most terrestrial optical communication systems with which the invention could be used, have operating temperatures of about 35ºC to 40ºC at the nodes where the amplifier would be used. Then by looking at the plot corresponding to the particular filter error for the amplifier in question, the optimum length selection for minimum gain ripple at a minimum temperature of 40ºC can be determined by selecting the fiber length where the plot has a minimal gain value for 40ºC and the temperature dependence of the plot is not too great, i.e. where the plot has "bottomed out". For example, for a low loss red end filter error, the plot shown in figure 5a "bottoms out" at about 14.3m to 14.4m and minimal gain occurs at a fiber length of 14.4m.

The selected length of EDF is then used to load the spools 5 and is spliced into the optical amplifier. Afterwards, whilst in operation, the erbium spools 5 are temperature controlled using a temperature monitoring device 3 and heater 2, as previously described above, achieving efficient minimization of EDFA gain flatness over temperature.

The optimum length of fiber is the total length of fiber to be used in the amplifier in order to achieve minimal gain deviation. Amplifiers suffer from losses due to the filters used in their construction, as well as the other components with which they are integrated in order that the amplifiers may be utilised in a communication system. If the losses are buried at the beginning of the amplifier, the noise performance of the amplifiers is degraded, and if the losses are buried at the end of the amplifier, then the output power of the amplifier is negatively affected. It is therefore more efficient to distribute losses throughout the whole of the amplifier, e.g. in the middle. So, rather than taking a fiber of optimal length and spooling it on to one mandrel, the optimal length of fiber is divided in to a number of sections, typically between two to four. Each section of fiber is spooled on to a corresponding mandrel and spliced in to the EDFA. The number and length of sections that the optimal length fiber is divided into depends on the specific amplifier, the communication system the amplifier is to be used in, and their associated loss characteristics.

Although the invention has been shown and described with respect to a best mode embodiment thereof, it should be understood by those skilled in the art that the foregoing and various other changes, omissions and additions in the form and detail thereof may be made therein without departing from the scope of the invention as claimed.

Although the description specifically mentions the use of erbium doped fiber, the present invention would work with other types of optical fiber, for example other types of doped optical fiber. Optical fibers that exhibit dynamic gain tilt characteristics would be particularly suited for use within the present invention. Such dopements could include co-dopements, for instance erbium doped fiber co-doped with bismuth, or erbium fiber co-doped with thulium. Use of these alternative optical fiber types as substantially described herein is considered to fall within the scope of the invention.

In summary, commercially available optical fiber amplifiers have gain over a large optical bandwidth, and for many applications, especially long distance fiber communications, developing techniques to flatten the gain of EDFA's is important. High gain amplifiers give rise to gain ripple and are thus more difficult to flatten effectively and efficiently. The invention provides a method of amplifying a signal in an optical fiber in an optical fiber amplifier having a pre-determined operating temperature range, whereby the temperature of the fiber in the pre-determined operating temperature range is maintained, and the fiber has an optimal length so as to minimize gain ripple in the amplifier over the operating temperature range. The invention also provides an optical fiber amplifier having an optimal length of fiber, a heater and a temperature monitor both coupled thermally to the fiber. The temperature monitor is responsive to the temperature falling below the pre-determined operating temperature range of the amplifier to energize the heater, and is responsive to the temperature rising higher than the pre-determined operating temperature range of the amplifier to de-energize the heater.

## Claims

1. A method of amplifying a signal in an optical fiber in an optical fiber amplifier having a predetermined operating temperature range, said method comprising:
maintaining the temperature of said optical fiber in said predetermined operating temperature range of said optical amplifier;
said optical fiber having an optimal length such as to minimize gain ripple in said optical fiber amplifier over said operating temperature range.

2. A method of manufacture of an optical fiber amplifier which includes a gain flattening filter, a length of optical fiber and a predetermined operating temperature range, said method comprising:
calculating an optimal length of said optical fiber for minimum gain ripple over said operating temperature range of said optical fiber amplifier;
and making said optical fiber amplifier from said optical fiber of said optimal length.

3. A method according to claim 2 wherein the optimal length of optical fibre is calculated by determining a filter error function for said optical fibre amplifier and calculating from said filter error function the optimal length of optical fibre.

4. A method according to claim 2 wherein the optimal length of optical fibre is calculated by:
measuring the total passive loss of the optical fiber amplifier including said gain flattening filter, without the presence of optical fiber, at substantially nominal operating temperature;
deriving an amplifier gain spectrum from a reference gain spectrum for said optical fiber and from said measurement of the total passive loss; and
calculating gain ripple against optical fiber length over temperature from said amplifier gain spectrum.

5. A method of manufacture according to claim 4 further comprising measuring said reference gain spectrum for said optical fiber.

6. A method according to any of the preceding claims wherein said optimal length of optical fiber comprises one or more spools (5) of optical fiber, the combined length of optical fiber in said spool or spools being substantially equal to said optimal length.

7. A method according to any of the preceding claims wherein said optical fiber amplifier is an erbium doped fiber amplifier, and said optical fiber is erbium doped fiber.

8. An optical fiber amplifier comprising:
an optimal length of fiber, said optimal length being such as to minimize gain ripple in said amplifier over a predetermined operating temperature range of said amplifier; and
a means for controlling the temperature of said optimal length of optical fiber.

9. An optical fiber amplifier according to claim 8 wherein the means for controlling the temperature said optimal length of optical fibre includes a heater (2) and a temperature monitor device (3) both coupled thermally to said optimal length of optical fibre.

10. An optical fibre amplifier according to claim 9 wherein the means for controlling the temperature of said optimal length of optical fibre further includes a temperature control circuit (11) responsive to said temperature monitor signaling a temperature below a first predetermined threshold temperature to energize said heater, and responsive to said temperature monitor signaling a temperature above a second predetermined threshold temperature, higher than said first threshold temperature, to de-energize the heater.

11. An optical fiber amplifier according to any of claims 8-10 further comprising a gain flattening filter which has a filter error function, the optimal length of said optical fiber for minimum gain ripple over the operating temperature of the amplifier being a function of said filter error function.

12. An optical fiber amplifier according to any of claims 8-11 wherein said optimal length of optical fiber comprises one or more spools (5) of optical fiber, the combined length of optical fiber in said spool or spools being substantially equal to said optimal length.

13. An optical fiber amplifier according to any of claims 8-12 wherein said optical fiber amplifier is an erbium doped fiber amplifier and said optical fiber is erbium doped fiber.

14. An optical system comprising:
a transmitter for transmitting optical signals;
a receiver for receiving said optical signals from said transmitter;
a transmission channel connecting said transmitter to said receiver and along which said optical signals travel from said transmitter to said receiver; and
an optical fiber amplifier for amplifying said optical signals as they travel along said transmission channel, said optical fiber amplifier comprising one or more spools (5) of optical fiber; the combined length of optical fiber in said spool or spools being substantially equal to an optimal length of said optical fiber, said optimal length being such as to minimize gain deviation in said amplifier over a predetermined operating temperature range of said amplifier; a heater means (2) for heating said optical fiber; and a monitor means (3) for monitoring the temperature of said optical fiber, and responsive to the temperature falling below the predetermined operating temperature range of said amplifier to energize heater means, and responsive to the temperature rising higher than said predetermined operating range of said amplifier to de-energize the heater means.
